# EUROPEAN PATENT APPLICATION

(11) **EP 1 318 678 A2**
(43) Date of publication of application: **11.06.2003**
(21) Application number: 02012523.3
(22) Date of filing: 05.06.2002
(51) Int. Cl.: H04N 7/173

(54) **Method for measuring audience information of interactive applications and associated devices**

(30) Priority: 10.12.2001 EP 01403185
(71) Applicant: Thomson Licensing S.A., 92100 Boulogne-Billancourt (FR)
(72) Inventor: Schaeffer, Ralf, 35690 Acigné (FR); Letellier, Philippe, 35760 St Grégoire (FR)
(74) Representative: Kohrs, Martin

(57) **Abstract**

This invention describes an method for measuring audience information of at least an interactive application carried out on a television receiver. At first, the interactive application is downloaded from a first network. Then the followings steps are executed in the television receiver:
- downloading an inspection code module,
- inspection of the interactive application by the inspection code module and collecting data used or provided during the interactive application execution,
- storing in a inspection data module the inspection data relative to interactive application execution.

Further it describes mechanisms how this information can be conveyed to data collection/analysis centre.

## Description

This invention concerns a method for measuring audience information of interactive applications and associated devices. This invention relates to the field of the broadcast television and here specifically to building systems that are capable of performing measurements of audiences of television services.

### Technical background

Many companies are interested today to get feedback how their service or product is perceived by the user. This is true for clients of advertising companies who want to know whether their latest advertisement expenses contributed to a better knowledge of their product. This is equally true for the television business. Broadcasters, network operators and content providers want to know how many people watched the Saturday evening game show running at prime time. These are just a few examples for today's public opinion polls.

In the beginnings of the television era it was just important to get a feedback how big was the audience for a certain television event. The information was collected manually, the process was therefore slow and expensive.

Today many digital television networks deploy interactive services. In such interactive services, applications are broadcast over a broadcast network or a broadband network and the user can navigate with his remote control in the application. Such applications can be related to an audio/video service, or they can be stand-alone, i.e. a full service. Interactive game shows are examples for applications that accompany A/V services. EPGs (Electronic Program Guides) or weather applications are examples for full interactive services. Some applications are just downloaded to the user terminal (or interactive television set), other use a return channel so as to send information to a server.

Interactive applications are either based on program code or are based on HTML technology. This code is sent via the broadcast stream (or via a point to point connection) to the user terminal where it is executed. Such applications are usually written in an interoperable format (examples are OpenTV, MediaHighway, MHP, HTML), which can run on terminals from different type and vendor.

Interactive application are relatively new and it is not sure that television viewers are ready to use them. Such applications are sometimes in competition with classical A/V based broadcast services. A weather forecast can be presented as an A/V clip, but it can as well be presented as an interactive application. Advertisements can as well be presented as an A/V clip, as an interactive application or as a combination of them.
- Companies exploiting interactive services want to know things like:
- Which interactive applications are really used by the television viewers ?
- What are television viewers doing with the interactive applications ?
- How do users navigate in the interactive application ?
- Is there an advantage or disadvantage for interactive applications compared to classical A/V clips

These questions ask for a concept how to measure the usage of interactive applications. The goal of the invention disclosed in this document is to describe a concept how to inspect the usage of interactive applications.

### Technical problem

The technical problem consists of finding an inexpensive solution for acquiring data about the usage of interactive applications in television systems with a minimum modification of the broadcast chain and user equipment.

A typical interactive television viewer equipment consists of:
- Television set (low end to high end), mandatory
- Interactive Set Top Box (STB can be digital or analogue)

Of course, the interactive STB could be directly integrated in the television set. Let's do a set of assumptions about the different players implicated in the value chain. It is clear that different roles can be handled by the same player.

Let assume that there is an interactive service provider who wants to understand how television viewers use the interactive applications in their service.

Let assume that there is a company or institute that is specialised in public opinion polls in the interactive television environment. These companies choose a representative group of the population, so as to perform the poll with this chosen subset of the population. In the case of television opinion polls, the institute usually installs a special equipment in the home of the observed television viewers. Usual opinion polls in France are conducted with 300 to 500 observed households. This can vary from country to country (depends on number of inhabitants) and from project to project.

A company must develop and manufacture the observation equipment that is installed in the homes of the observed TV viewers. Such products are sold in small numbers, as we have seen there are often 300 to 500 devices. Producing equipment in small quantities means a high price for the equipment.

The selected television viewers in their home must not be disturbed in their usual habits by the measurement equipment.

The goal of this invention is to describe an observation mechanism for public opinion polls that deals with the measurement of the usage of interactive applications in television environments. The described mechanism can be used for digital and analogue interactive television systems.

The subject of the invention is a method for measuring audience information of at least an interactive application carried out on a television receiver, the interactive application being downloaded from a first network characterized in that it comprises the following steps :
- downloading an inspection code module,
- inspection of the interactive application by the inspection code module and collecting data used or provided during the interactive application execution,
- storing in a inspection data module the inspection data relative to interactive application execution.

Another subject of the invention is a television receiver for the execution of interactive application, comprising a means for receiving an interactive application from a broadcast network, characterized in that it comprises means for downloading an inspection code module, the inspection code module containing means for intercepting data used or provided during the interactive application execution, and means for storing the inspection data relative to the interactive application execution in a inspection data module.

The present invention relates also :
- a process for conducting self inspection of interactive applications by means of CODE inspection and DATA inspection modules
- a process for transforming a generic CODE inspection module to the specific CODE inspection module by means of parameterisation
- a process for conducting inspections of interactive applications by means of system software inspection.
- a description of an Inspection CODE Module that permits to perform system software inspection.
- a process of transporting the Inspection DATA Module to the analysis centre

Other characteristics and advantages of the invention will become apparent with the description of some of its embodiments, this description being given with reference to the drawings appended hereto, in which:
- Figure 1 represents an interactive television chain according to an example of realization of this invention,
- Figure 2 represents the different modules that allows the interactive application self inspection to work,
- Figure 3 represents a diagram showing an specific example of realization of the inspection module,
- Figure 4 represents a diagram of the different layers of the inspection module
- Figure 5 represents a diagram showing the interaction between the inspection module and the others modules.

### Invention description

This invention describes how an existing interactive system can be used to collect data about the use of interactive television applications.

### Interactive television chain

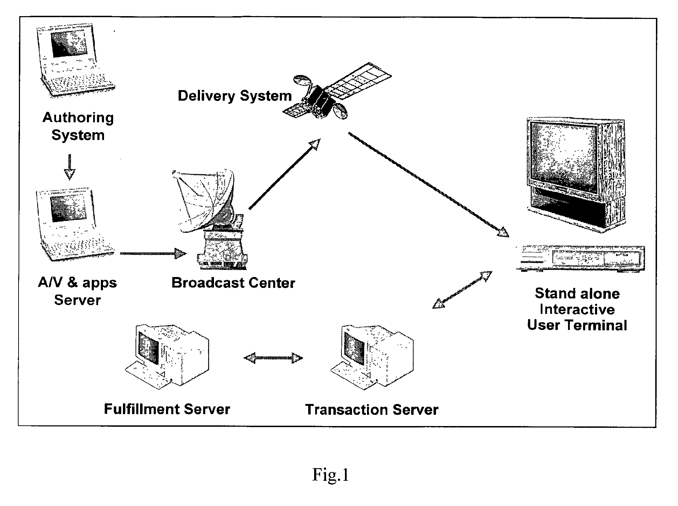

Figure 1 shows a typical interactive television chain. For deploying interactive applications a whole interactive chain is necessary. A basic interactive system which is deployed over broadcast networks needs an authoring system, broadcast tools and the interactive engine in the user terminal. More complete systems can include return channels so as to exchange information with servers. Interactive systems are mostly based on execution engines (virtual machines) or on presentation engines (declarative content). Rarely such systems are built on native code, since it does not insure interoperability.

The authoring system is used for developing the interactive applications. This authoring system is adapted to the interactive engine deployed in the user terminal. Usually the application consists of code and data. The application author transfers the application to the broadcast centre, where the broadcast equipment with the application server is located. The authoring system is usually software that is written specifically for the interactive system. The application author and the authoring system are entry points for interactive application inspection mechanisms.

The interactive application server is an entity that plays out the interactive application in synchronization with the A/V streams. In the case of a full servce interactive application, there is no AN stream. The interactive application server is often a specific piece of hardware and software. There are efforts to use standardized broadcast formats like DSM-CC object carousels, which make such equipment more versatile. The interactive application server is an entry point for interactive application inspection mechanisms.

The broadcast equipment itself is completely agnostic to the interactive system, since it just modulates the transport stream for the desireddelivery system.

The delivery system is as well agnostic to the interactive system.

The user terminal is located in the home of the television viewer. This user terminal integrates the interactive engine and can have the form of a Set Top Box or it can be integrated in a television set. As an input medium either an infrared remote control or a sort of IR keyboard is used. The input medium is used for navigating in the interactive application. In many cases the user terminal is connected to a return channel, where it can exchange information with a server. The user terminal is an entry point for interactive application inspection mechanisms.

### Data collection process

The data collection process deals with the mechanisms how the user actions are captured.

### Application self inspection

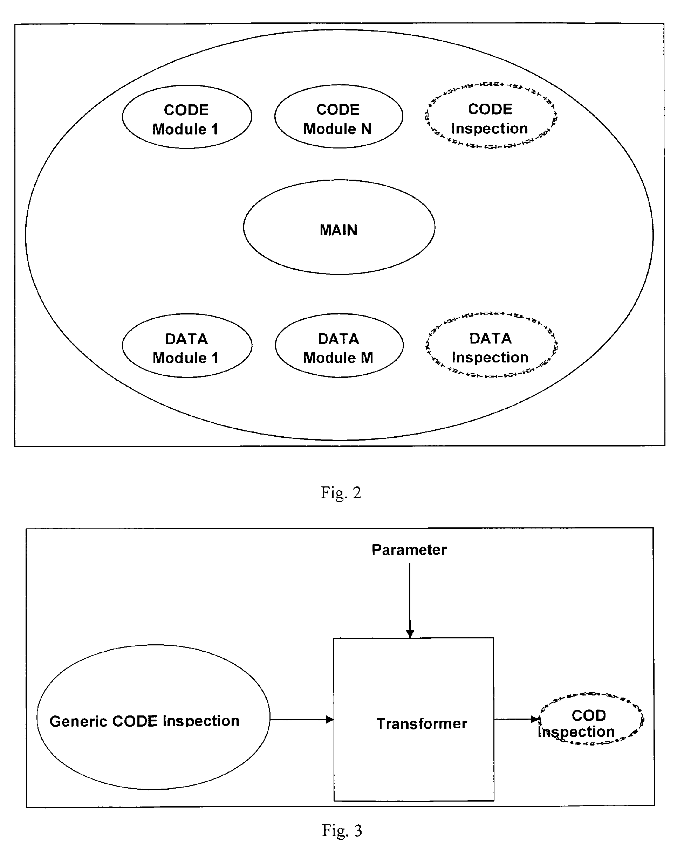

Figure 2 shows how the interactive application self inspection works. An interactive application consists usually of one to N code modules and zero to M data modules. The numbers N and M depend on the design of the application. One of the code modules contains the entry point of the application. The code and data modules are linked and unlinked depending on their usage.

Usually the whole application is downloaded over a broadcast network, where it is continually sent in a carousel. It can as well be possible that some modules are uploaded via a point-to-point network.

The technical problem is how to inspect an interactive application that is sent over networks to an user terminal without modifying the network equipment and without modifying the user terminal. This problem is covered by the invention described now:
When a service provider wants to collect information about "if and how a specific application is used" it can be done in the following way:
   The service provider writes a specification so as to describe in what kind of information about his interactive application he is interested in. This specification is given to the institute which will conduct the public opinion poll about interactive application. Either this institute or a company specialized in developing measurement systems for public opinion polls will provide "CODE inspection" software module.
   This "CODE inspection" module is dedicated for each interactive system, since all interactive systems are different and not interoperable among one another.
   The "CODE inspection" module is generic and it needs to be specialized so that it fits to the requirements of the client. Figure 3 shows how the inspection module is specialized to as to get an optimised version for the inspection problem and for the specific interactive engine. This is necessary so as to optimise the inspection module to the specific inspection problem and to get a minimum code size and minimum performance overhead for the system.
   The code of the application itself performs calls at strategic points to the CODE inspection module and stores inspection data in the DATA inspection module.
   The CODE inspection module uses one of the below described data transfer processes so as to bring the DATA inspection module to the server for analysis.
   This solution allows a complete inspection of how a user navigates in the application. The here described solution is ideally fitted if a service provider wants to inspect his own applications.

### Application inspection by the system software observation

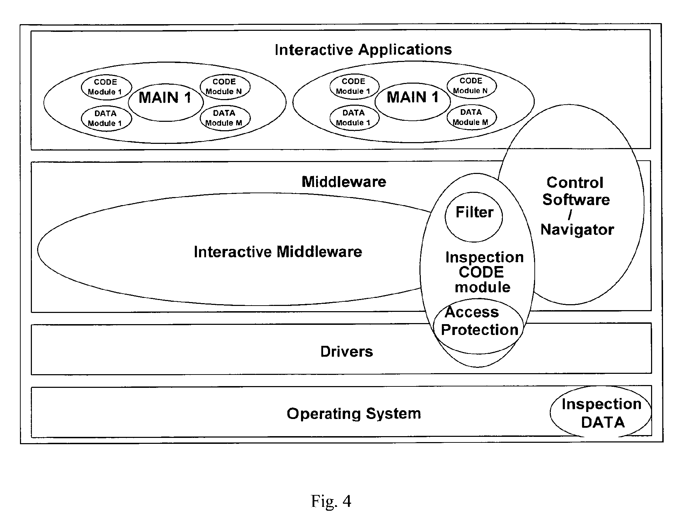

Figure 4 shows how the interactive application can be inspected by observing the user terminal's system software.

In this proposal there is no modification at all in the broadcast chain. The applications do not contain any specific code for inspection. The complete inspection process is done by the system software and therefore a specific Inspection CODE Module need to be integrated by the manufacturer in the system software.

The Interactive Applications are downloaded over networks to the user terminal. There can be one or more Interactive Applications at the same time and they can run concurrently. The Middleware is the heart of the interactive user terminal. It consists of the Interactive Middleware that isolates the Interactive Application from the underlying hardware. The Interactive Middleware is usually generic for several products and for several manufacturers. The Control Software implements the behaviour of a specific product, like the start up, the set up and the navigator with the user interface. The Inspection CODE module is described below. The Drivers program the different hardware entities of the user terminal and provide access to the hardware. The Operating System manages system resources like CPU and memory.

The Inspection CODE Module interfaces with the Interactive Middleware, with the Control Software and with the Drivers. The interface with the Interactive Middleware is highly important for inspecting what a user is doing with the application. The Inspection CODE Module contains generic inspection mechanisms and can be programmed to record only the wanted information.

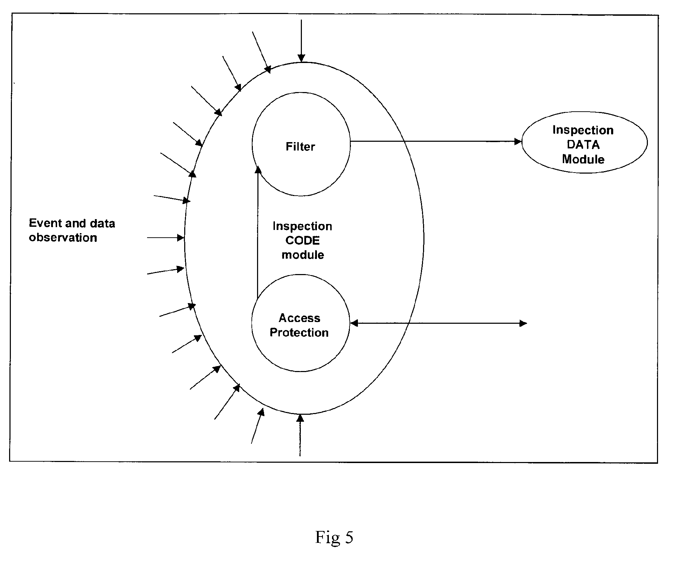

Figure 5 shows on the left side a multitude of data inputs. The following is a non-exhaustive list of examples for such data inputs:
- Keyboard events
- User interface elements events from widgets like buttons, lists, dialogs, text entry fields, sliders ...
- File access
- CA
- Application lifecycle control
- Return channel and network access
- Service selection and tuning
- Media API control
- Inter-application communication
- User settings and preferences access
- ...

Storing all these data is not clever, since depending on the interest, only a subset of these data is relevant. Therefore the Inspection CODE Module contains a filter, which filters out the relevant data and stores them in the Inspection DATA Module. The filter is programmed via an API (Application Programming Interface) that is only accessible via the Access Protection module. The Access Protection module insures that only a restricted community of people have access to the Inspection CODE Module for collecting data about user behaviour. The Inspection CODE Module is generic and can serve multiple instances at the same time.

In this description we leave it open how and whom access is granted to the Inspection CODE Module. One model could be that a manufacturer grants access to these APIs to an institute. The institute pays in this case royalties to the manufacturer. Instead of the manufacturer it could be as well the operator of the platform park.

### Data transfer processes

The data transfer process deals with the mechanisms how the collected data are transferred to the analysis centre. The here described data processes can be applied to all data collection processes described in this invention.

### Event based forward mechanism

In this proposal the event is forwarded to a server as soon as it is generated. For doing this a permanent connection is required, such as it is available on cable return channels. The advantage of this solution is that no information is stored in the user terminal itself.

HTML based online applications can be easily inspected in this way. Each user action requests new information from the server and the server can directly capture these user requests. This works only correctly with online applicationsif there is no cache in the user terminal. Each request has to go straight to the server. The event based forward mechanism needs a specific function from the interactive system to send data in real time to a port that is permanently connected to a return channel network.

### Store and forward mechanism

With the store and forward mechanism, collected data is first stored in the user terminal. Later it is transferred to a server. Later can be any point in time after the application was stopped running. It can be 1 minute later or some weeks later. Such a store and forward based system has the advantage that it minimises calls to a server. The store and forward mechanism need to be implemented by the manufacturer in the user terminal.

### Application session based forward mechanism

The application session based forward mechanism is based on the principle that the application itself cares for the data transfer to a server. One way to do it is that the application connects via the return channel to a server so as to transfer the collected data. This solution works on all interactive systems where the applications has access to the return channel.

### Interactive systems without a return channel

If there is no return channel available, then an external box needs to be connected to the interactive system which handles the transfer to the server. Communication with the external box can be done via a serial port or via protocols of the EURO-AV connector (VBI or AV-Link).

Invention advantages
- Inspection and observation of the user behaviour during the lifecycle of an interactive application
- One proposed concept works with the existing broadcast cast chain including application server, delivery system and user terminal. This proposal requires that the service provider agrees to the observation of the interactive applications.
- One proposal concept work with any interactive service running on the user terminal. This proposal requires the integration of a specific Inspection CODE module in the system software
- Proposals can work with any interactive system. It works on system based on execution engines and on systems based on presentation engines.

## Claims

1. Method for measuring audience information of at least an interactive application carried out on a television receiver, the interactve application being downloaded from a first network **characterized in that** it comprises the following steps :
- downloading an inspection code module,
- inspection of the interactive application by the inspection code module and collecting data used or provided during the interactive application execution,
- storing in a inspection data module the inspection data relative to interactive application execution.

2. Method for measuring audience information as defined in claim 1, **characterized in that** the interactive application contains at least an entry point, the data that is conveyed through this entry point are collected by the inspection code module, the entry point being genetared by an application authoring system.

3. Method for measuring audience information as defined in claim 1, **characterized in that** the interactive application contains at least an entry point to communicate with an interactive application server, the data that is conveyed through this entry point are collected by the inspectioncode module.

4. Method for measuring audience information as defined in previous claims 1 to 3, **characterized in that** the inspection code module contains a filter which filters the relevant data collected in the input/output data of the interactive application, the filtered data corresponding to a exhaustive list of data inputs.

5. Method for measuring audience information as defined in previous claims 1 to 4, **characterized in that** a generic inspection code module is transformed to a inspection code specific to an interactive application, the interactive application calling at strategic points to the inspection code module for transmitting data to be stored in the inspection data module.

6. Method for measuring audience information as defined in previous claims 1 to 5, **characterized in that**, as soon as a inspection data is collected by the inspection code module, this data is sent to a analysis centre via a connection with second network.

7. Method for measuring audience information as defined in previous claims 1 to 5, **characterized in that**, the inspection data are stored in the television receiver memory, every predetermined duration, the contents of the memory is downloaded to a server via a connection with a second network.

8. Method for measuring audience information as defined in previous claims 1 to 7, **characterized in that**, the inspection code module is a part of the interactive application, the inspection code module being downloaded in the same way than the interactive application.

9. Method for measuring audience information as defined in previous claims 1 to 7, **characterized in that**, the inspection code module is incorporated by the manufacturer of the televisiopn receiver in the receiver system code.

10. Television receiver for the execution of interactive application, comprising a means for receiving an interactive application from a broadcast network, **characterized in that** it comprises means for downloading an inspection code module, the inspection code module containing means for intercepting data used or provided during the interactive application execution, and means for storing the inspection data relative to the interactive application execution in a inspection data module.

11. Television receiver for the execution of interactive application, as defined in claim 10, **characterized in that** it comprises means for using the method according to the claims 1 to 9.
